# EUROPEAN PATENT APPLICATION

(11) **EP 2 482 537 A1**
(43) Date of publication of application: **01.08.2012**
(21) Application number: 12152752.7
(22) Date of filing: 26.01.2012
(51) Int. Cl.: H04N 1/32

(54) **Terminal and image processing method thereof**

(30) Priority: 27.01.2011 KR 20110008093
(71) Applicant: Samsung Electronics Co., Ltd., Suwon-si, Gyeonggi-do (KR)
(72) Inventor: Kwak, Byoung Hoon, Gyeonggi-do (KR)
(74) Representative: Jenkins, Richard Gavin

(57) **Abstract**

A terminal and method for processing video data of an augmented reality image produced by adding information about objects in the image taken by the camera of the terminal in real time are provided. The method includes displaying (515) an image in augmented reality mode, requesting (525) augmented reality information of objects constituting the image, presenting (535), if the augmented reality information is received, the augmented reality information in relation to the respective objects, merging (545), if a message transmission is requested (540), the image and the augmented reality information; and transmitting (540) the merged image as an augmented reality image. The image processing method of the present invention is advantageous for the terminal to provide the user with information related to the objects presented in an image produced using the augmented reality function.

## Description

### BACKGROUND OF THE INVENTION

### 1. Field of the Invention:

The present invention relates to a terminal and audio image processing method. More particularly, the present invention relates to a terminal and method for processing video data of an augmented reality image produced by adding information about objects presented in the image captured by a camera of the terminal in real time.

### 2. Description of the Related Art:

With the diversification and rapid advance of communication, camera, and multimedia technologies, it has become possible for a user of a portable terminal to enjoy various multimedia services using the size-constrained portable terminal. Such multimedia services are further enriched with the high definition image capability of the portable terminal.

As the transmission data rate of the terminal over a network increases, the user can download and consume various types of information. As an example, augmented reality technology has been developed based on the increased data rate and enhanced image display technologies.

Augmented Reality (AR) is a technology that superimposes a computer-generated synthetic object over a real world image captured by the user. Since AR provides the user with the supplementary information superimposed over the real world image captured in real time, it is also referred to as Mixed Reality (MR).

AR technology typically presents information of an object in the image, taken by the camera module, and changes in shape according to the location and orientation of the terminal equipped with the camera module. When it is required to save the AR image in the conventional AR image processing method, the object image taken by the camera and the information superimposed on the image that is produced by AR are saved as a merged image.

The conventional AR image processing method has a drawback in that the real world image and the supplementary information superimposed thereon that are saved as the merged image are not used separately. Furthermore, although the supplementary information is saved as a separate file, if the file is lost or corrupted, it is impossible to present the supplementary information on the corresponding image.

There is therefore a need for a mobile terminal and method that effectively process an image produced by an AR function.

### SUMMARY OF THE INVENTION

Aspects of the present invention are to address at least the above-mentioned problems and/or disadvantages and to provide at least the advantages described below. Accordingly, an aspect of the present invention is to provide a mobile terminal and method that effectively process an image produced by an AR function.

In accordance with an aspect of the present invention, an image processing method of a terminal is provided. The method includes displaying an image in an augmented reality mode, requesting augmented reality information of objects constituting the image, presenting, when the augmented reality information is received, the augmented reality information in relation to the respective objects, merging, when a message transmission is requested, the image and the augmented reality information, and transmitting the merged image as an augmented reality image.

In accordance with another aspect of the present invention, a method of processing an image of a terminal is provided. The method includes determining, when a message is received, whether the message includes an augmented reality image, separating, when the message includes the augmented reality image, the augmented reality image into a raw image and a layer having augmented reality information, and displaying the augmented reality information over the raw image.

In accordance with still another aspect of the present invention, a terminal for processing an image is provided. The terminal includes a camera unit for capturing an image, a communication unit for transmitting a request for augmented reality information of objects constituting the image, a display unit for displaying the image taken by the camera unit and the augmented reality information received in response to the request, and a control unit for merging, when a message transmission is requested, the image and the augmented reality information and for transmitting the merged image as an augmented reality image.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a configuration of a terminal according to an exemplary embodiment of the present invention;

FIG. 2 is a diagram illustrating an exemplary Augmented Reality (AR) mode execution screen of a terminal according to an exemplary embodiment of the present invention;

FIG. 3 is a diagram illustrating a process of generating an AR image according to an exemplary embodiment of the present invention;

FIG. 4 is a diagram illustrating a process of separating an AR image into a captured image and AR information according to an exemplary embodiment of the present invention;

FIG. 5 is a flowchart illustrating an image processing method according to an exemplary embodiment of the present invention;

FIG. 6 is a flowchart illustrating a procedure for generating an AR image according to an exemplary embodiment of the present invention; and

FIG. 7 is a flowchart illustrating a procedure for separating an AR image into a raw image and AR information according to an exemplary embodiment of the present invention.

Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

In the following description, the term 'Augmented Reality (AR)' denotes a technology that superimposes a computer-generated synthetic object over a real world image captured by a user. Since AR provides the user with the supplementary information as superimposed over the real world image captured in real time, it is also referred to as Mixed Reality (MR).

In the following description, the term 'AR information' denotes information on an object in an image captured by a camera in an AR mode that can include building information, user information, and the like. The AR information can include information on the environment around the terminal as well as information on the object according to the location and orientation of the terminal. For example, the AR information can include the name of the object, structure information, temperature, illumination, color, movement speed of the object, change of shape, and the like.

In the following description, the term 'watermark algorithm' denotes the process of inserting a bit pattern into the digital image or audio or video file for verifying the authenticity thereof. Here, the watermark algorithm is used to insert the AR information to an image in the form of a bit pattern such that the AR information can be recognized by a counterpart designated by the user.

In the following description, the term 'terminal' denotes a portable device such as a mobile communication terminal, a Digital Multimedia Broadcast (DMB) receiver, a Personal Digital Assistant (PDA), a smartphone, and other equivalent information communication and multimedia devices. Here, the terminal is equipped with a camera to capture an image.

An exemplary operating principle of the present invention is described with reference to the accompanying drawings. The same reference numbers are used throughout the drawings to refer to the same or like parts. Detailed descriptions of well-known functions and structures incorporated herein may be omitted to avoid obscuring the subject matter of the present invention. Although the terms used in the present invention are selected from generally known and used terms considering their functions in the present invention, the terms can be modified depending on the intention of a person skilled in the art, practices, or the advent of new technology. Accordingly, the terms used herein should be understood not simply by the actual terms used but by the meaning lying within and the description disclosed herein.

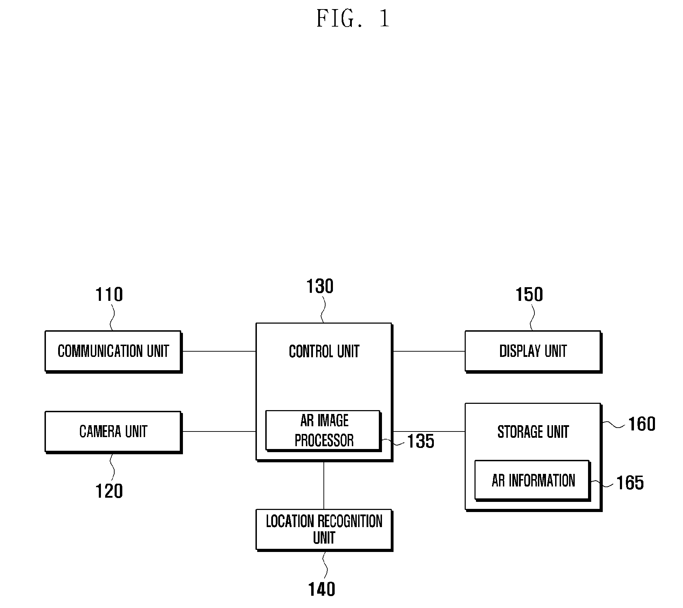

FIG. 1 is a block diagram illustrating a configuration of a terminal according to an exemplary embodiment of the present invention.

Referring to FIG. 1, the terminal includes a communication unit 110, a camera unit 120, a control unit 130, a location recognition unit 140, a display unit 150, and a storage unit 160.

The communication unit 110 is responsible for communication of the mobile terminal, for example with a base station. That is, the communication unit 110 establishes a communication channel with the base station for data communication such as text messaging and video calling as well as voice calling. The control unit 110 can include a Radio Frequency (RF) transmitter for up-converting and amplifying a transmission signal and an RF receiver for low noise amplifying and downconverting a received signal. More particularly, in an exemplary embodiment of the present invention, the communication unit 110 can request a server for AR information corresponding to an object constituting an image taken by the camera unit under the control of the control unit 130 in the AR mode. In the AR mode, the communication unit 110 can request the server for AR information of each object of the image according to the location and orientation of the terminal under the control of the control unit 130. The communication unit 110 also can transfer the AR information received from the server to the control unit 130.

The camera unit 120 can capture an image under the control of the control unit 130. The camera unit 120 includes a camera sensor for converting an optical signal input through a lens to an analog video signal and a signal processor for converting the analog video signal to digital video data. The camera sensor may be a Charge Coupled Device (CCD) sensor, and the signal processor may be a Digital Signal Processor (DSP). The camera sensor and the signal processor can be incorporated into a single device or implemented separately.

The control unit 130 controls the overall operations and states of the components of the terminal. In the AR mode, the control unit 130 can control to transmit the AR image selected by the user to a counterpart terminal. The control unit 130 can process the AR image transmitted by a counterpart terminal and display the received AR image on the display unit 150. For this purpose, the control unit 130 can include an AR image processor 135.

When a message transmission is requested in the AR mode, the AR image processor 135 generates an AR image by combining the AR information with the image. In more detail, the AR image processor 135 arranges the AR information on a transparent layer. At this time, the AR image processor 135 processes the pixels on which not AR information is arranged to be transparent. The AR image processor 135 applies a watermark algorithm to the AR information arranged on the transparent layer over the captured image. That is, the AR image processor 135 superimposes the AR information arranged on the transparent layer over the captured image in the form of a watermark. The AR image processor 135 merges the captured image and the AR information layer in the form of watermark into an AR image in JPEG format.

If a message is received, the AR image processor 135 determines whether the received message includes an AR image. Whether the AR image is included can be determined based on information related to the application of the watermark algorithm. For example, if the image is in JPEG format, the control unit 130 can evaluate the userdata region of the Exchangeable Image file Format (EXIF) information of the image information to determine whether the watermark algorithm is applied or not.

The location recognition unit 140 can acquire information on the location of the terminal and the orientation of the camera lens. For this purpose, the location recognition unit 140 can include a magnetic sensor and a Global Positioning System (GPS) receiver. The location recognition unit 140 transfers the information on the location of the terminal and the orientation of the camera lens to the controller 130.

The display unit 150 can display various contents related to the state and operation of the terminal. More particularly, the display unit 150 can display the image taken by the camera unit 120 and the AR information received through the communication unit 110 simultaneously in the AR mode under the control of the control unit 130. The display unit 150 also can display the image along with the AR information stored in the storage unit 130 under the control of the control unit 130. The display unit 150 also can display the image taken by the camera unit 120 and specific AR information input by the user at a specific region of the image under the control of the control unit 130.

The storage unit 160 stores the data generated according to the operation and state of the mobile terminal under the control of the control unit 130. Here, the storage unit 160 can store AR information 165 and the corresponding image under the control of the control unit 130. Here, the AR information 165 is information on the objects constituting the image and can include detailed information such as building name, shop name, information on the owner, and the like.

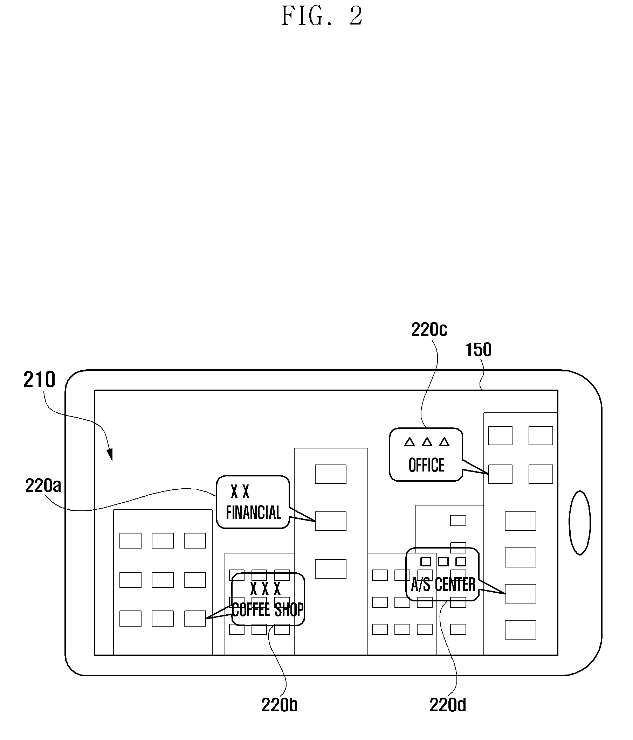

FIG. 2 is a diagram illustrating an exemplary AR mode execution screen of a terminal according to an exemplary embodiment of the present invention.

Referring to FIG. 2, in the AR mode, the control unit 130 controls such that the image 210 input by the camera unit 120 is displayed on the display unit 150. The control unit 130 determines the current location and orientation of the terminal by means of the location recognition unit 140. The control unit 130 requests the server for the AR information for the respective objects constituting the image according to the location and orientation of the terminal.

Once the AR information is received from the server, the control unit 130 displays the AR information 220a, 220b, 220c, and 220d corresponding to the objects in the image. That is, the control unit 130 presents the AR information 220a, 220b, 220c, and 220d received from the server specific regions on the image 210. For example, when the objects constituting the image are buildings, the control unit 130 presents the AR information, e.g. XX financial 220a, XXX coffee shop 220b, ΔΔΔ office 220c, and A/S center 220d at respective regions of the image in the AR mode.

Although the description is under the assumption of specific information of the objects that are received according to the location and orientation of the terminal, the present invention is not limited thereto. For example, the AR information can include the environment information showing the change of the environment around the terminal. The AR information also can include the information on the object name, structure, temperature, illumination, color, movement speed, shape conversion, and the like. The terminal can recognize the shape of the object to display the various AR information related to the object and measure the movement speed of the object to display the information on the speed. The terminal also can transmit the AR information in the form of a multimedia message according to a user setting.

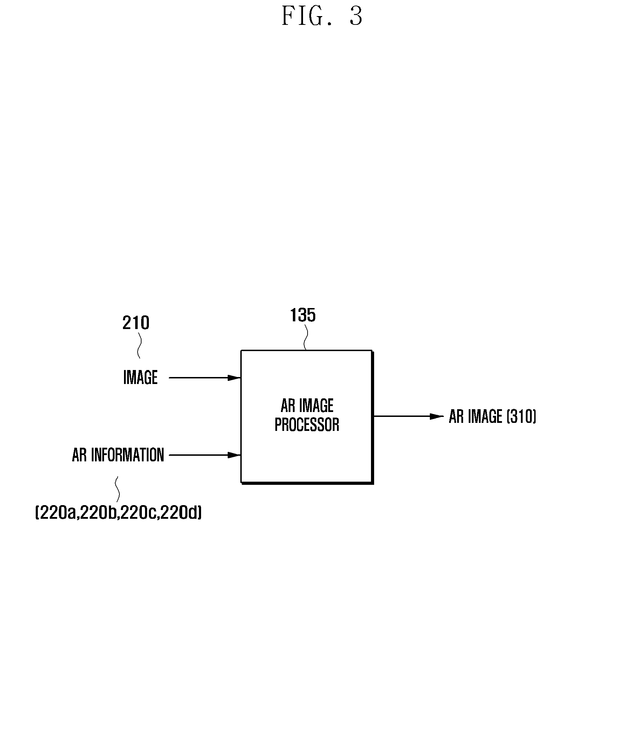

FIG. 3 is a diagram illustrating a process of generating an AR image according to an exemplary embodiment of the present invention.

Referring to FIG. 3, if a message transmission is requested in the AR mode, the AR image processor 135 generates an AR image 310 by combining the captured image 210 and the AR information 220a, 220b, 220c, and 220d. Here, the AR image processor 135 generates a transparent image layer including the AR information. That is, the AR image processor 135 processes the pixels not having AR information to be transparent.

The AR image processor 135 applies the watermark algorithm to the captured image and the transparent image layer having the AR information. That is, the AR image processor 135 places the transparent image layer of the AR information over the captured image in the form of a watermark. The AR image processor 135 also can merge the captured image and the AR information image layer in the form of the watermark into the AR image in JPEG format.

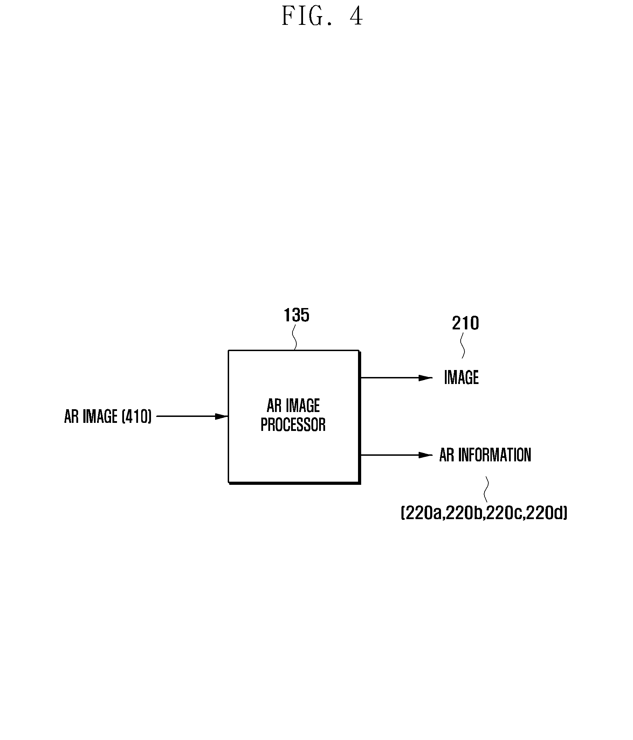

FIG. 4 is a diagram illustrating a process of separating an AR image into a captured image and AR information according to an exemplary embodiment of the present invention.

Referring to FIG. 4, if a message is received, the AR image processor 135 determines whether the image includes an AR image. If the message includes an AR image 410, the AR image processor 135 determines the watermark algorithm applied to the AR image 410. The AR image processor 135 applies a watermark separation algorithm corresponding to the determined watermark algorithm to the AR image 410. The AR image processing unit 135 separates the captured image 210 and the AR information 220a, 220b, 220c, and 229d in the form of a transparent layer.

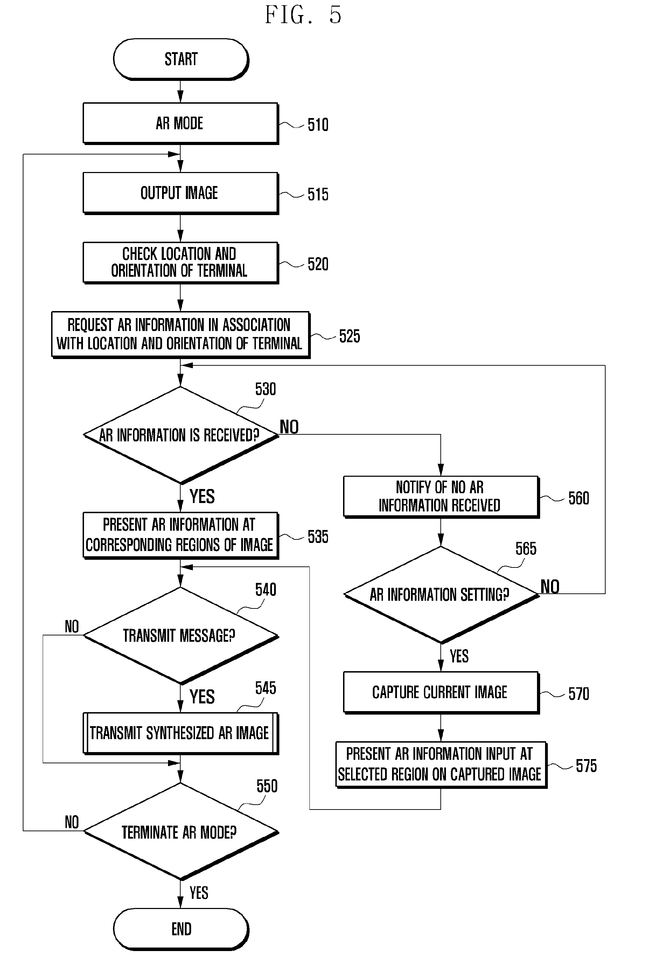

FIG. 5 is a flowchart illustrating an image processing method according to an exemplary embodiment of the present invention.

Referring to FIG. 5, the control unit 130 executes the AR mode according to the user request in step 510. In the AR mode, the control unit 130 controls such that the image taken by the camera unit 120 is displayed on the display unit 150 in step 515. At this time, the control unit 130 determines the objects constituting the captured image. The control unit 130 checks the current location of the terminal and the orientation of the lens of the camera unit 120 in step 520.

The control unit 130 requests the server, by means of the communication unit 110, to provide AR information per object that is available and corresponds to the current location of the terminal and the orientation of the camera lens in step 525. Afterward, the control unit 130 waits to receive the AR information through the communication unit 110 in step 530. If the AR information is received, the control unit 130 controls such that the AR information is displayed on the image displayed by the display unit 150 in step 535. The control unit 130 determines whether message transmission is requested in step 540.

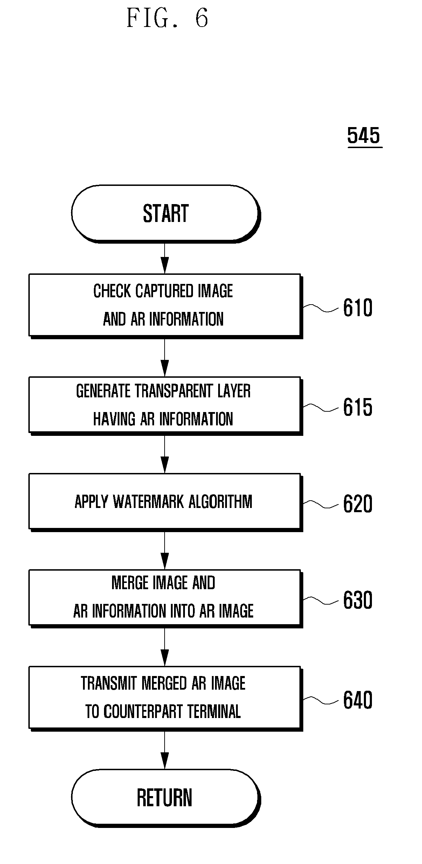

If message transmission is requested, the control unit 130 captures the image displayed on the display unit 150 in step 545. The control unit 130 transmits the AR image generated by combining the captured image and the AR information to a counterpart terminal selected by the user in step 545. Step 545 is described later in more detail with reference to FIG. 6. The control unit 130 determines whether an AR mode termination request is detected in step 550. Until the AR mode termination request is detected, the control unit 130 repeats the procedure from step 515.

Returning to step 530, if no AR information is received, the control unit 130 notifies the user of no AR information received in step 560. At this time, the control unit 130 can output the notification in the form of a popup window or an alarm sound. The control unit 130 determines whether an AR information setting option is selected in step 565.

If the AR information setting option is selected, the control unit 130 captures the image displayed on the display unit 150 in step 570. The control unit 130 presents the AR information input by the user at a region selected on the captured image in step 575. In more detail, the control unit 130 displays the captured image on the display unit 150. The control unit 130 determines whether a specific region is selected on the image. If a specific region is selected, the control unit 130 presents an input window such as a text balloon for receiving AR information. The control unit 130 controls such that the AR information input by the user is displayed in the input window. Although not depicted in FIG. 5, the control unit 130 can store the input AR information in the storage unit 160 along with the image. The procedure goes to step 540 such that control unit 130 can transmit the AR image generated by combining the captured image and the AR information to a counterpart terminal selected by the user.

An exemplary method for transmitting the captured image and AR information has been described. A description is now made of an exemplary procedure for generating an AR message to be transmitted to a counterpart terminal.

FIG. 6 is a flowchart illustrating a procedure for generating an AR image according to an exemplary embodiment of the present invention.

Referring to FIG. 6, if a message transmission is requested by the user, the control unit 130 checks the captured image and the AR information in step 610. The control unit 130 generates a transparent layer having the AR information in step 615. In more detail, the control unit 130 processes the image taken by the camera unit 120 in the DCR or YCbCr format. The control unit 130 configures the AR information to be presented on the display unit 150 in adaptation to the resolution of the image taken by the camera unit 120. That is, the control unit 130 generates a transparent image layer presenting the AR information. At this time, the control unit 130 processes the pixels having no video data of the AR information to be transparent.

The control unit 130 applies the watermark algorithm to the AR information presented in the transparent image layer over the captured image in step 620. The control unit 130 merges the captured image and the transparent image layer having the AR information into the AR image in step 630. That is, the control unit 130 superimposes the transparent image layer having the AR information over the captured image in the form of a watermark. The control unit 130 merges the captured image and the transparent image layer having the AR information into the AR image in JPEG format.

Finally, the control unit 130 transmits the merged AR image to the counterpart terminal selected by the user in step 640.

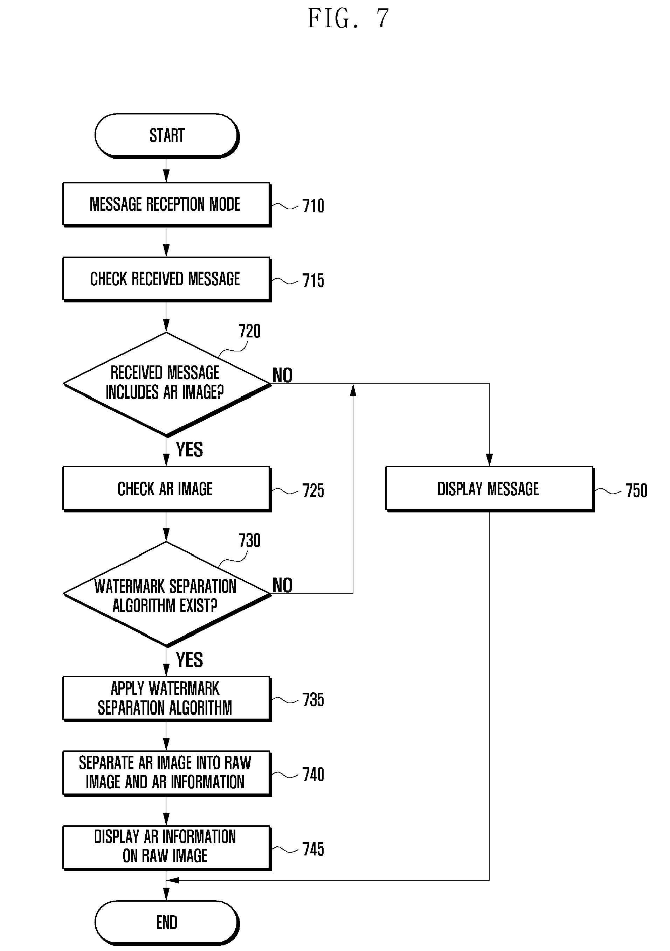

FIG. 7 is a flowchart illustrating a procedure for separating an AR image into a raw image and AR information according to an exemplary embodiment of the present invention.

Referring to FIG. 7, the control unit 130 executes a message reception mode in step 710. Once a message is received by means of the communication unit 110, the control unit 130 checks the received message in step 715. The control unit 130 determines whether the received message includes an AR image in step 720. Here, whether the AR image is included in the message is determined based on the information indicating whether the watermark algorithm is applied to the frame carrying the message. Also, the inclusion of the AR image can be determined based on the information indicating whether the watermark algorithm is used. In an exemplary case of JPEG format, the control unit 130 can determine the userdata region of the Exchangeable Image file Format (EXIF) information of the image information to determine whether the watermark algorithm is applied or not.

If it is determined that the message includes an AR image, the control unit 130 checks the AR image in step 725. That is, the control unit 130 checks the watermark algorithm applied to the AR image. The control unit 130 determines whether there is a watermark separation algorithm available for the AR image in step 730. If there is an available watermark separation algorithm, the control unit 130 applies the watermark separation algorithm to the AR image in step 735.

The control unit 130 separates the AR image into the raw image and the AR information in step 740. Finally, the control unit 130 displays the AR information on the image displayed by the display unit 150.

If it is determined that the message includes no AR image at step 720 or if there is no available watermark separation algorithm at step 730, the control unit 130 displays the message on the display unit 150 in step 750.

As described above, the user can transmit the AR information to a counterpart user. The image processing method according to exemplary embodiments of the present invention is capable of using the image produced by the AR function in various ways. For example, the user can send the AR image to the counterpart user. That is, the user can transmit a multi-mail having the photo showing a meeting place to the new corners. Also, the service provider can produce a promotion catalogue for tourist attractions or local governments using the images generated with the AR function.

While the present invention has been shown and described with reference to certain exemplary embodiments thereof, it will be understood by those skilled in the art that various changes in form and details may be made therein without departing from the spirit and scope of the present invention, as defined in the appended claims and their equivalents.

## Claims

1. A method of processing an image by a terminal, the method comprising:
displaying an image in an augmented reality mode;
requesting augmented reality information of objects constituting the image;
presenting, when the augmented reality information is received, the augmented reality information in relation to the respective objects;
merging, when a message transmission is requested, the image and the augmented reality information; and
transmitting the merged image as an augmented reality image.

2. The method of claim 1, wherein the merging of the image and the augmented reality information comprises:
generating a transparent image layer presenting the augmented reality information; and
combining the image and the transparent image layer into the augmented reality image.

3. The method of claim 2, wherein the combining of the image and the transparent image layer comprises synthesizing the image and the transparent layer using a watermark algorithm.

4. The method of claim 1, wherein the presenting of the augmented reality information comprises:
determining, when no augmented reality information is received, whether an augmented reality setting option is selected;
capturing, when the augmented reality setting option is selected, the image;
and
displaying augmented reality information input at a region selected on the captured image.

5. The method of claim 1, wherein the augmented information comprises at least one of a building name, a temperature, an illumination, color, a speed, and a shape change.

6. The method of claim 1, wherein the requesting of the augmented reality information of the objects comprises requesting transmission of augmented information of the objects according to location and orientation of the terminal.

7. A method of processing an image of a terminal, the method comprising:
determining, when a message is received, whether the message includes an augmented reality image;
separating, when the message includes the augmented reality image, the augmented reality image into a raw image and a layer having augmented reality information; and
displaying the augmented reality information over the raw image.

8. The method of claim 7, wherein the separating of the augmented reality image comprises:
determining whether a watermark separation algorithm is available for separating the augmented reality image; and
decomposing, when a watermark separation algorithm is available, the augmented reality image into the raw image and the augmented reality information using the watermark separation algorithm.

9. A terminal for processing an image, the terminal comprising:
a camera unit for taking an image;
a communication unit for transmitting a request for augmented reality information of objects constituting the image;
a display unit for displaying the image taken by the camera unit and the augmented reality information received in response to the request; and
a control unit for merging, when a message transmission is requested, the image and the augmented reality information and for transmitting the merged image as an augmented reality image.

10. The terminal of claim 9, wherein the control unit generates a transparent image layer presenting the augmented reality information and combines the image and the transparent image layer into the augmented reality image.

11. The terminal of claim 10, wherein the control unit synthesizes the image and the transparent layer using a watermark algorithm.

12. The terminal of claim 9, wherein the control unit determines, when no augmented reality information is received, whether an augmented reality setting option is selected, captures, when the augmented reality setting option is selected, the image, and displays augmented reality information input at a region selected on the captured image.

13. The terminal of claim 9, wherein the control unit determines, when a message is received through the communication unit, whether the message includes an augmented reality image, separates, when the message includes the augmented reality image, the augmented reality image into a raw image and a layer having augmented reality information, and controls the display unit to display the augmented reality information over the raw image.

14. The terminal of claim 13, wherein the control unit determines whether a watermark separation algorithm is available for separating the augmented reality image and decomposes, when a watermark separation algorithm is available, the augmented reality image into the raw image and the augmented reality information using the watermark separation algorithm.

15. The terminal of claim 9, further comprises a location recognition unit for recognizing a current location of the terminal and an orientation of the camera unit, wherein the communication unit transmits a request for the augmented reality information of respective objects according to the location of the terminal and the orientation of the camera unit.
